# FASCICULE DE BREVET EUROPEEN

(11) **EP 0 339 070 B1**
(45) Date de publication et mention de la délivrance du brevet: **01.09.1993**
(21) Numéro de dépôt: 88909545.1
(22) Date de dépôt: 21.10.1988
(51) Int. Cl.: G11B 5/255, G11B 5/31

(54) **TETE MAGNETIQUE D'ENREGISTREMENT-LECTURE A COUCHE ANTI-ABRASION ET PROCEDE DE REALISATION**
AUFZEICHNUNGS-WIEDERGABEMAGNETKOPF MIT ANTIVERSCHLEISSSCHICHT UND VERFAHREN ZU SEINER HERSTELLUNG
MAGNETIC READ/WRITE HEAD WITH ABRASION-RESISTANT LAYER AND PROCESS FOR MAKING IT

(30) Priorité: 27.10.1987 FR 8714823
(43) Date de publication de la demande: 02.11.1989
(73) Titulaire: THOMSON-CSF, 75008 Paris (FR)
(72) Inventeur: MEUNIER, Paul-Louis, F-75012 Paris (FR); LEHUREAU, Jean-Claude, F-91700 Ste-Geneviève-des-Bois (FR); ROLLAND, Jean-Luc, F-21000 DIJON (FR)
(74) Mandataire: Grynwald, Albert
(86) Numéro de dépôt international: FR8800516
(87) Numéro de publication internationale: WO8904039

(56) Documents cités:
- EP-A- 0 241 371
- FR-A- 2 474 219
- PATENT ABSTRACTS OF JAPAN, vol. 10, no. 180 (P-471)(2236) 24 juin 1986; & JP-A-6129409
- Patent Abstracts of Japan, vol. 10, no. 45 (P-430)(2102) 21 février 1986; & JP-A-60191407

## Description

La présente invention concerne une tête magnétique d'enregistrement-lecture à couche anti-abrasion et plus particulièrement une tête magnétique comportant, sur sa surface en contact avec le support d'enregistrement magnétique, une couche anti-usure. L'invention concerne également un procédé de réalisation d'une telle couche anti-abrasion.

Les têtes magnétiques réalisées avec un substrat ferrite telles que les têtes très haute définition de vidéo familiale (VHS) actuelles, soumises au défilement de bande à 5ms⁻¹ ou les têtes digitales actuelles (3,32 ms⁻¹) connues sous la désignation RDAT (Rotary Digital Audio Tape), subissent une lente érosion qui les rend inutilisables au bout de 2000 heures d'utilisation. Au tout d'un tel temps de fonctionnement, la tête peut être en effet usée sur 20 micromètres de hauteur.

Une solution au problème de l'usure est de déposer une couche anti-abrasion sur la tête. Dans le document EP-A-0 241 371 on trouve cette idée de réaliser une couche de protection à la surface d'une tête magnétique. Malheureusement l'accrochage de matériaux comme le carbone est très difficile sur le ferrite, et vu l'hétérogénéité des matériaux pouvant constituer une tête magnétique tels que : ferrite, alumine, verre, la couche de carbone s'avère être difficile à déposer.

L'invention permet de résoudre ce problème de dépôt d'une couche anti-abrasion sur une tête magnétique et notamment sur la surface de la tête en contact avec un support d'enregistrement magnétique.

L'invention concerne donc une tête magnétique d'enregistrement-lecture comprenant deux pôles magnétiques séparés par un entrefer en matériau non magnétique caractérisé en ce qu'elle comporte également :
- sur chaque pôle magnétique, une couche d'un matériau magnétique ayant un bon coefficient de collage sur les pôles magnétiques et sur laquelle une couche à base de carbone a un bon coefficient de collage, cette couche ne recouvrant uniquement que les pôles magnétiques ;
- sur l'ensemble des couches de matériau magnétique et de l'entrefer, une couche anti-abrasion d'un matériau à base de carbone.

L'invention concerne également une tête magnétique d'enregistrement-lecture comprenant deux pôles magnétiques séparés par un entrefer en matériau non magnétique, caractérisée en ce qu'elle comporte également des couches d'accrochage, d'un matériau magnétique ayant un bon coefficient de collage sur les pôles magnétiques, ne recouvrant uniquement que les pôles magnétiques, les zones non recouvertes étant occupées par un matériau non magnétique, l'ensemble des couches d'accrochage et du matériau non magnétique étant recouvert par une couche anti-abrasion ayant un bon coefficient de collage sur le matériau des couches d'accrochage.

L'invention concerne également un procédé de réalisation d'une tête magnétique d'enregistrement-lecture selon l'une quelconque des revendications précédentes, caractérisé en ce qu'il comporte les différentes étapes suivantes :
- une première étape de réalisation, sur la face active de l'un des pôles magnétiques de la tête magnétique d une première couche d'accrochage ;
- une deuxième étape de réalisation sur la première couche d'accrochage, sur l'entrefer et sur le deuxième pôle magnétique, d'une couche d'un matériau non magnétique ;
- une troisième étape de réalisation, sur la couche de matériau non magnétique, d'une deuxième couche d'accrochage ;
- une quatrième étape d'usinage de la deuxième couche d'accrochage et de la couche de matériau non magnétique jusqu'à atteindre la première couche d'accrochage ;
- une cinquième étape de réalisation, sur les deux couches d'accrochage et sur la partie de la couche de matériau non magnétique restant entre les deux couches d'accrochage, d'une couche d'un matériau anti-abrasion jusqu'à atteindre la première couche d'accrochage ;
Les différents objets et caractéristiques de l'invention apparaîtront plus clairement à l'aide de la description qui va suivre faite en se reportant aux figures annexées qui représentent :
- la figure 1, un exemple de réalisation d'une tête magnétique selon l'invention ;
- la figure 2, une variante de réalisation de la tête magnétique de la figure 1 ;
- la figure 3, une tête magnétique planaire selon l'invention en vue de dessus ;
- la figure 4, une vue en coupe d'une tête magnétique en couches minces,
- les figures 5 à 7, différentes étapes d'un procédé de réalisation selon l'invention.

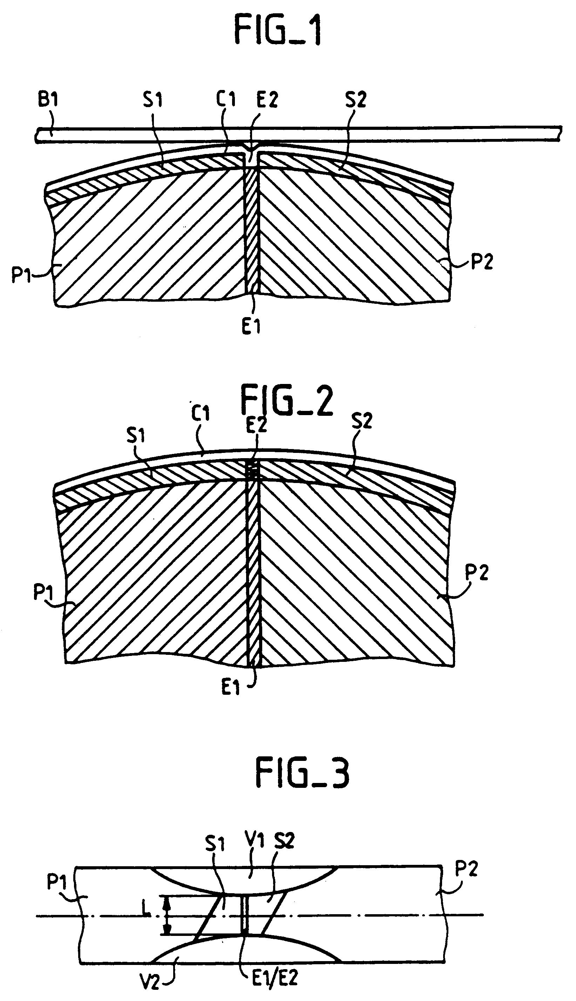

En se reportant à la figure 1, on va tout d'abord décrire un exemple de réalisation d'une tête magnétique selon l'invention.

Cette tête magnétique comporte deux pôles magnétiques P1 et P2 en matériau magnétique à base de ferrite. Les deux pôles magnétiques P1, P2 sont séparés par un entrefer E1 en matériau non magnétique à base d'alumine (Al₂ O₃) ou de silice (Si O₂).

Une telle tête magnétique doit être recouverte d'une couche en matériau dur résistant à l'abrasion. Une telle couche sera de préférence d'une composition à base de carbone. Cependant, il s'avère que le carbone s'accroche mal sur la ferrite.

Selon l'invention, tel que cela est représenté sur la figure 1, on prévoit sur chaque pôle magnétique P1, P2, une couche S1, S2 d'accrochage en matériau magnétique.

Le matériau constituant les couches S1, S2 a une composition telle qu'il accroche bien sur la ferrite des pôles magnétiques S1, S2 et que la couche anti-abrasion C1 accroche également bien sur ce matériau.

Sur les couches S1, S2 est déposée une couche anti-abrasion C1 telle qu'une couche à base de carbone.

L'invention prévoit, ce qui est important, que les couches S1, S2 sont en matériau magnétique pour éviter qu'elles ne constituent des entrefers supplémentaires. Elles doivent avoir la propriété de coller efficacement sur les pôles magnétiques et une couche anti-abrasion à base de carbone devra également coller efficacement sur ces couches S1, S2.

Selon l'invention, les couches S1, S2 seront à base d'un matériau du type connu dans la technique sous l'appellation Sendust. Le Sendust est un matériau magnétique de formule générale :

Feₓ Si_{y} Al_{z}

dans laquelle, par exemple :
- x est compris entre 70 et 85 (soit 80 par exemple)
- y est compris entre 5 et 15 (soit 10 par exemple)
- z est compris entre 5 et 15 (soit 10 par exemple)
On a constaté et vérifié expérimentalement que le Sendust accroche très bien sur le ferrite ainsi que le carbone sur le Sendust. Aux compositions indiquées ci-dessus, il possède les propriétés magnétiques de la ferrite. Mais toute composition intermédiaire est possible. Notamment, il est possible de rajouter un quatrième élément tel que du carbone, ce qui donne une formule générale :

Feₓ Si_{y} Al_{z} Cₜ

dans laquelle : x + y + z + t = 100
et dans lesquelles les compositions en fer, silicium et aluminium étant sensiblement les mêmes que précédemment on a t compris entre 0 et 15.

Les couches S1, S2 pourront également être en un autre matériau magnétique ayant les propriétés de collage décrites précédemment. Par exemple, ce matériau pourra être un alliage de Nickel et de Fer NiFe tel que désigné couramment dans la littérature technique sous l'appellation Permalloy.

Les pôles magnétiques P1, P2 en ferrite étant recouverts de couches d'accrochage S1 et S2, une couche anti-abrasion C1 recouvrant les couches S1 et S2 protégera la tête magnétique contre l'usure d un support magnétique d'enregistrement tel qu'une bande magnétique B1 défilant devant la tête et frottant sur la couche anti-abrasion C1.

Sur la figure 1, il est à noter que les couches d'accrochage S1, S2 sont séparées à l'endroit de l'entrefer E1 par un espace constituant un entrefer E2. La couche anti-abrasion C1 remplit donc cet entrefer.

Pour éviter, comme cela est représenté en figure 1, que la surface de la couche anti-abrasion C1 présente un creux au niveau de l'entrefer E2 on prévoit de polir la couche anti-abrasion C1. On prévoit également, selon la variante de réalisation de la figure 2, que l'entrefer E2 comporte un matériau non magnétique tel que de l'alumine AL₂ O₃ ou de la silice (Si O₂) ou un matériau à base de l'une de ces compositions. La surface de la couche anti-abrasion C1 est alors une surface régulière.

La figure 3 représente une vue de dessus d'une tête magnétique planaire.

Deux pôles magnétiques P1, P2 situés sur un substrat se font face et sont séparés par un entrefer E1.

Comme précédemment les pôles magnétiques sont recouverts de couches d'accrochage S1, S2. Ces couches sont séparées par un entrefer E2 et l'ensemble est recouvert d'une couche anti-abrasion.

Cependant une telle tête planaire doit présenter une largeur L (1 à 3 micromètres) de l'entrefer réduite par rapport au substrat. Les pôles magnétiques présentent donc des rétrécissements aux abords de l'entrefer tel que cela est représenté en figure 3. Les couches d'accrochage S1, S2 ne doivent recouvrir uniquement que les pôles magnétiques et ne doivent pas déborder sur le substrat portant les pôles pour éviter que ces couches d'accrochage S1, S2 qui sont en matériau magnétique n'agrandissent la largeur L de l'entrefer E1 ou ne court-circuitent l'entrefer E1.

Les zones non recouvertes par les pôles magnétiques P1, P2, de part et d'autre des rétrécissements, sont donc occupées par un matériau V1, V2 non magnétique tel qu'un matériau à base de silice (Si O₂) ou d'alumine (Al₂ O₃). Ce matériau affleure la partie supérieure des couches d'accrochage S1, S2 de façon à former une surface unie.

L'ensemble des couches d'accrochage S1, S2 et matériau non magnétique (V1, V2) est recouvert de la couche anti-abrasion C1 (non représenté en figure 3) comme cela est représenté en figure 2. On obtient une surface de tête magnétique planaire parfaitement unie et présentant une bonne résistance à toute usure dû au frottement contre le support d'enregistrement.

Les têtes magnétiques des figures 1 et 2 peuvent être du type comprenant des couches métalliques de chaque côté de l'entrefer du type MIG (Metal in Gap). L'invention s'applique de la même façon à de telles têtes magnétiques.

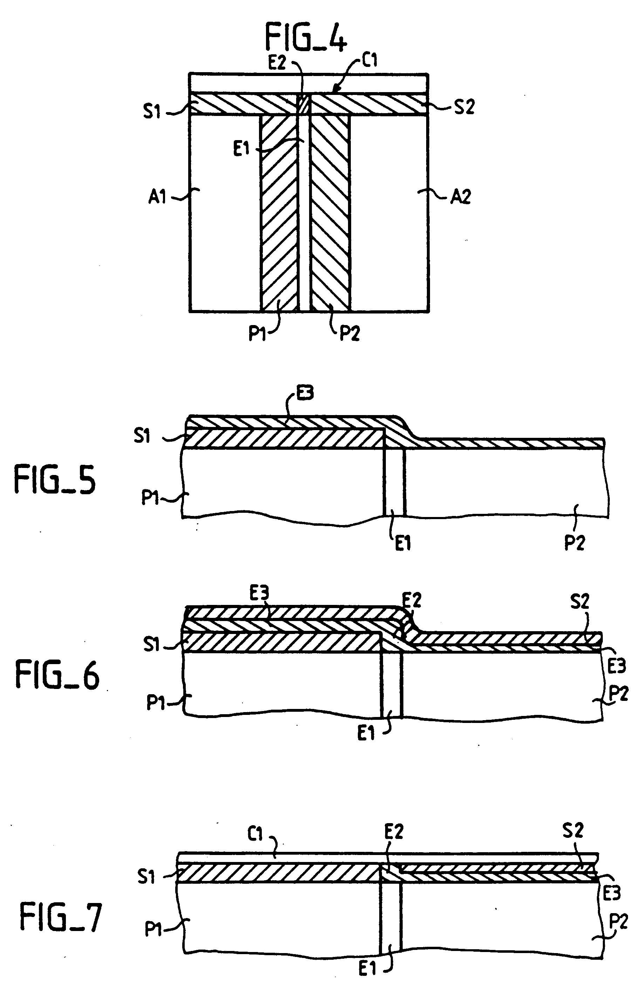

L'invention est également applicable à une tête magnétique en couches minces tel que cela est représenté par la figure 4. La tête magnétique de la figure 4 comporte deux couches en matériau magnétique P1, P2 constituant les pôles magnétiques. Ces couches P1, P2 sont solidaires de matériaux supports A1, A2 tels que de l'alumine et sont séparées par un entrefer E1. La partie active de la tête magnétique supporte deux couches d'accrochage S1, S2 en sendust par exemple, séparées par un entrefer E2. L'ensemble des couches S1, S2 et de l'entrefer E2 est recouvert d'une couche anti-abrasion C1.

En se reportant aux figures 5 à 7, on va décrire un procédé de réalisation des couches d'accrochage S1, S2 et de la couche anti-abrasion C1 selon l'invention.

Le procédé de l'invention est appliqué, dans la description qui va suivre, à l'une quelconque des têtes magnétiques décrites précédemment.

Au cours d'une première étape, sur la surface active d'une tête magnétique comportant deux pôles magnétiques P1 et P2 séparés par un entrefer E1, et plus particulièrement sur la face active du pôle P1 est réalisée une couche d'accrochage S1 dont la composition est du type décrit précédemment.

Au cours d'une deuxième étape, la couche S1 et le pôle magnétique P2 sont recouverts d'une couche E3 d'un matériau non magnétique. On obtient ainsi une structure représentée en figure 5.

Au cours d'une troisième étape, la couche E3 est recouverte d'une couche S2 en matériau identique à celui de la couche S2 comme cela est représenté en figure 6.

Au cours d'une quatrième étape, les couches E3 et S2 sont usinées jusqu'à atteindre la couche S1. Il ne reste alors plus de matériau de la couche E3 sur le pôle magnétique S1. Par contre entre les couches S1 et S2 une partie de la couche E3 subsiste réalisant un entrefer E2 entre les couches S1 et S2.

Au cours d'une cinquième étape, l'ensemble est recouvert d'une couche anti-abrasion C1. On obtient alors une structure telle que représentée en figure 7.

Selon une variante de réalisation du procédé de l'invention, si on veut éviter que ne subsiste sur le pôle magnétique P2 du matériau de la couche E3, on prévoit après la deuxième étape de réalisation de la couche E3, une phase de gravure de la couche E3 ne laissant subsister que le matériau nécessaire à la réalisation de l'entrefer E2 de façon a obtenir une forme de réalisation conforme par exemple aux figures 2 et 4.

A titre d'exemple l'épaisseur de la couche d'accrochage à base de Sendust peut être de 100 Angstroems et celle de la couche anti-abrasion à base de carbone également de 10 nanomètres (100 Angstroems).

## Revendications

1. Tête magnétique d'enregistrement-lecture comprenant deux pôles magnétiques (P1, P2) séparés par un entrefer (E1) en matériau non magnétique caractérisée en ce qu'elle comporte également :
- sur chaque pôle magnétique (P1, P2), une couche (S1, S2) d'un matériau magnétique ayant un bon coefficient de collage sur les pôles magnétiques (P1, P2) et sur laquelle une couche à base de carbone a un bon coefficient de collage, cette couche ne recouvrant uniquement que les pôles magnétiques ;
- sur l'ensemble des couches (S1, S2) de matériau magnétique et de l'entrefer (E1), une couche anti-abrasion (C1) d'un matériau à base de carbone.

2. Tête magnétique d'enregistrement-lecture selon la revendication 1, caractérisée en ce que les pôles magnétiques sont en ferrite.

3. Tête magnétique d'enregistrement-lecture selon la revendication 1, caractérisée en ce que ladite couche de matériau magnétique est à base de Feₓ Si_{y} Al_{z}.

4. Tête magnétique d'enregistrement-lecture selon la revendication 1, caractérisée en ce que ladite couche de matériau magnétique est à base de Permalloy (Nᵢ Fₑ).

5. Tête magnétique d'enregistrement-lecture selon la revendication 2 caractérisée en ce que le matériau magnétique est à base de Feₓ Si_{y} Al_{z} Cₜ comporte les proportions suivantes :
- x = 70 à 85 pour cent de fer
- y = 5 à 15 pour cent de silicium
- z = 5 à 15 pour cent d'aluminium
- t = 0 à 15 pour cent de carbone
la somme x + y + z + t étant égal à 100.

6. Tête magnétique d'enregistrement-lecture de forme planaire selon la revendication 1 comprenant deux pôles magnétiques (P1, P2) en couches minces déposés sur un substrat (1) et séparés par un entrefer (E1), caractérisée en ce que la couche anti-abrasion (C1) recouvre également la ou les zones de substrat (1) non recouvertes par les pôles magnétiques P1, P2 et par l'entrefer (E).

7. Tête magnétique d'enregistrement-lecture selon la revendication 1, caractérisée en ce que les couches (S1, S2) de matériau magnétique recouvrant chaque pôle magnétique (P1, P2) sont séparées entre elle par un matériau non magnétique (E2).

8. Tête magnétique d'enregistrement - lecture selon la revendication 6, caractérisée en ce que ledit matériau non magnétique (E2) est un matériau à base de silice.

9. Tête magnétique d'enregistrement/lecture selon la revendication 6, caractérisée en ce que ledit matériau non magnétique (E2) est un matériau à base d'alumine.

10. Procédé de réalisation d'une tête magnétique d'enregistrement/lecture selon l'une quelconque des revendications précédentes, caractérisé en ce qu'il comporte les différentes étapes suivantes :
- une première étape de réalisation sur la face active de l'un des pâles magnétiques (P1) de la tête magnétique d'une première couche d'accrochage (S1) ;
- une deuxième étape de réalisation, sur la première couche d'accrochage (S1), sur l'entrefer (E1) et sur le deuxième pôle magnétique (P2), d'une couche d'un matériau non magnétique (E3) ;
- une troisième étape de réalisation, sur la couche de matériau non magnétique (E3), d'une deuxième couche d'accrochage (S2) ;
- une quatrième étape d'usinage de la deuxième couche d'accrochage (S2) et de la couche de matériau non magnétique (E3) jusqu'à atteindre la première couche d'accrochage (S1) ;
- une cinquième étape de réalisation, sur les deux couches d'accrochage (S1, S2) et sur la partie (E2) de la couche de matériau non magnétique restant entre les deux couches d'accrochage (S1, S2), d'une couche (C1) d'un matériau anti-abrasion.

11. Procédé selon la revendication 10, caractérisé en ce qu'il comporte entre la deuxième et la troisième étape une phase de gravure de la couche de matériau non magnétique E3 de façon à ne conserver de cette couche que ladite partie (E2) devant rester entre les deux couches d'accrochage (S1, S2).

12. Tête magnétique d'enregistrement-lecture comprenant deux pôles magnétiques (P1, P2) séparés par un entrefer (E1) en matériau non magnétique, caractérisée en ce qu'elle comporte également des couches d'accrochage (S1, S2), d'un matériau magnétique ayant un bon coefficient de collage sur les pôles magnétiques, ne recouvrant uniquement que les pôles magnétiques (P1, P2), les zones non recouvertes étant occupées par un matériau (V1, V2) non magnétique, l'ensemble des couches d'accrochage (S1, S2) et du matériau (V1, V2) non magnétique étant recouvert par une couche anti-abrasion (C1) ayant un bon coefficient de collage sur le matériau des couches d'accrochage.

13. Tête magnétique d'enregistrement-lecture selon la revendication 12, caractérisée en ce que la surface supérieure du matériau non magnétique (V1, V2) affleure la surface supérieure des couches d'accrochage (S1, S2) de façon à former une surface unie.

## Claims

1. Magnetic read/write head comprising two magnetic poles (P1, P2) separated by an air gap (E1) made of non-magnetic material, characterised in that it also includes:
- on each magnetic pole (P1, P2), a layer (S1, S2) of a magnetic material having a high coefficient of adhesive bonding to the magnetic poles (P1, P2) and to which a carbon-based layer has a high coefficient of adhesive bonding, this layer covering just the magnetic poles alone;
- on both the layers (S1, S2) of magnetic material and on the air gap (E1), an abrasion-resistant layer (C1) of a carbon-based material.

2. Magnetic read/write head according to Claim 1, characterised in that the magnetic poles are made from ferrite.

3. Magnetic read/write head according to Claim 1, characterised in that the said layer of magnetic material is based on FeₓSi_{y}Al_{z}.

4. Magnetic read/write head according to Claim 1, characterised in that the said layer of magnetic material is based on Permalloy (Ni-Fe).

5. Magnetic read/write head according to Claim 2, characterised in that the magnetic material is based on FeₓSi_{y}Al_{z}Cₜ which includes the following proportions:
- x = 70 to 85 per cent of iron
- y = 5 to 15 per cent of silicon
- z = 5 to 15 per cent of aluminium
- t = 0 to 15 per cent of carbon
the sum, x + y + z + t, being equal to 100.

6. Magnetic read/write head of planar shape, according to Claim 1, comprising two magnetic poles (P1, P2) made from thin layers deposited on a substrate (1) and separated by an air gap (E1), characterised in that the abrasion-resistant layer (C1) covers equally the zone or zones of the substrate (1) not covered by the magnetic poles (P1, P2) and by the air gap (E1).

7. Magnetic read/write head according to Claim 1, characterised in that the layers (S1, S2) of magnetic material covering each magnetic pole (P1, P2) are separated from each other by a non-magnetic material (E2).

8. Magnetic read/write head according to Claim 6, characterised in that the said non-magnetic material (E2) is a silica-based material.

9. Magnetic read/write head according to Claim 6, characterised in that the said non-magnetic material (E2) is an alumina-based material.

10. Process for making a magnetic read/write head according to any one of the preceding claims, characterised in that it includes the following various steps:
- a first step for making, on the active face of one of the magnetic poles (P1) of the magnetic head, a first clinging layer (S1);
- a second step for making, on the first clinging layer (S1), on the air gap (E1) and on the second magnetic pole (P2), a layer (E3) of a non-magnetic material;
- a third step for making, on the layer (E3) of non-magnetic material, a second clinging layer (S2);
- a fourth step for machining the second clinging layer (S2) and the layer (E3) of non-magnetic material until the first clinging layer (S1) is reached;
- a fifth step for making, on the two clinging layers (S1, S2) and on that part (E2) of the layer of non-magnetic material which remains between the two clinging layers (S1, S2), a layer (C1) of an abrasion-resistant material.

11. Process according to Claim 10, characterised in that it includes, between the second and the third step, a phase for etching the layer (E3) of non-magnetic material so as to keep just that said part (E2) of this layer which is to remain between the two clinging layers (S1, S2).

12. Magnetic read/write head comprising two magnetic poles (P1, P2) separated by an air gap (E1) made from non-magnetic material, characterised in that it also includes clinging layers (S1, S2), made of a magnetic material having a high coefficient of adhesive bonding to the magnetic poles, covering just the magnetic poles (P1, P2) alone, the non-covered zones being occupied by a non-magnetic material (V1, V2), both the clinging layers (S1, S2) and the non-magnetic material (V1, V2) being covered by an abrasion-resistant layer (C1) having a high coefficient of adhesive bonding to the material of the clinging layers.

13. Magnetic read/write head according to Claim 12, characterised in that the upper surface of the non-magnetic material (V1, V2) is flush with the upper surface of the clinging layers (S1, S2) so as to form a smooth surface.

## Patentansprüche

1. Magnetischer Aufzeichnungs/Lese-Kopf mit zwei Magnetpolen (P1, P2), die durch einen Spalt (E1) aus nichtmagnetischem Material voneinander getrennt sind, dadurch gekennzeichnet, daß er auch folgendes enthält:
- auf jedem Magnetpol (P1, P2) eine Schicht (S1, S2) aus einem magnetischen Material, die einen guten Koeffizienten einer Klebung auf den Magnetpolen (P1, P2) besitzt und auf der eine Schicht auf der Basis von Kohlenstoff einen guten Klebekoeffizienten aufweist, wobei diese Schicht nur die Magnetpole bedeckt, und
- auf der Einheit von Schichten (S1, S2) aus magnetischem Material und dem Spalt (E1) eine abriebfeste Schicht (C1) aus einem Material auf der Basis von Kohlenstoff.

2. Magnetischer Aufzeichnungs/Lese-Kopf nach Anspruch 1, dadurch gekennzeichnet, daß die Magnetpole aus Ferrit bestehen.

3. Magnetischer Aufzeichnungs/Lese-Kopf nach Anspruch 1, dadurch gekennzeichnet, daß die Schicht aus magnetischem Material auf der Basis von Feₓ Si_{y} Al_{z} besteht.

4. Magnetischer Aufzeichnungs/Lese-Kopf nach Anspruch 1, dadurch gekennzeichnet, daß die Schicht aus magnetischem Material auf der Basis von Permalloy (Nᵢ Fₑ) besteht.

5. Magnetischer Aufzeichnungs/Lese-Kopf nach Anspruch 2, dadurch gekennzeichnet, daß das magnetische Material auf der Basis von Feₓ Si_{y} Al_{z} Cₜ besteht, wobei die folgenden Verhältnisse vorliegen:
- x = 70 bis 85 Prozent Eisen
- y = 5 bis 15 Prozent Silizium
- z = 5 bis 15 Prozent Aluminium
- t = 0 bis 15 Prozent Kohlenstoff,
wobei die Summe x + y + z + t gleich 100 ist.

6. Magnetischer Aufzeichnungs/Lese-Kopf, der eine flache Form aufweist, nach Anspruch 1, wobei der Kopf zwei Magnetpole (P1, P2) aus dünnen Schichten enthält, die auf ein Substrat (1) aufgebracht und durch einen Spalt (E1) voneinander getrennt sind, dadurch gekennzeichnet, daß die abriebfeste Schicht (C1) auch die Substratzone oder die Substratzonen (1) bedeckt, die nicht von den Magnetpolen (P1, P2) und von dem Spalt (E1) bedeckt sind.

7. Magnetischer Aufzeichnungs/Lese-Kopf nach Anspruch 1, dadurch gekennzeichnet, daß die Schichten (S1, S2) aus magnetischem Material, die jeden Magnetpol (P1, P2) bedecken, durch ein nichtmagnetisches Material (E2) untereinander getrennt sind.

8. Magnetischer Aufzeichnungs/Lese-Kopf nach Anspruch 6, dadurch gekennzeichnet, daß das nichtmagnetische Material (E2) ein Material auf der Basis von Siliziumdioxid ist.

9. Magnetischer Aufzeichnungs/Lese-Kopf nach Anspruch 6, dadurch gekennzeichnet, daß das nichtmagnetische Material (E2) ein Material auf der Basis von Aluminiumoxid ist.

10. Verfahren zur Herstellung eines magnetischen Aufzeichnungs/Lese-Kopfes nach einem der vorhergehenden Ansprüche, dadurch gekennzeichnet, daß es die folgenden Schritte enthält:
- einen ersten Schritt der Herstellung einer ersten Befestigungsschicht (S1) auf der aktiven Seite des einen der Magnetpole (P1) des Magnetkopfes,
- einen zweiten Schritt der Herstellung einer Schicht (E3) aus nichtmagnetischem Material auf der ersten Befestigungsschicht (S1), auf dem Spalt (E1) und auf dem zweiten Magnetpol (P2),
- einen dritten Schritt der Herstellung einer zweiten Befestigungsschicht (S2) auf der Schicht (E3) aus nichtmagnetischem Material,
- einen vierten Schritt der Bearbeitung der zweiten Befestigungsschicht (S2) und der Schicht (E3) aus nichtmagnetischem Material bis zum Erreichen der ersten Befestigungsschicht (S1), und
- einen fünften Schritt der Herstellung einer Schicht (C1) aus einem abriebfesten Material auf den beiden Befestigungsschichten (S1, S2) und auf dem Teil (E2) der Schicht aus nichtmagnetischem Material, der zwischen den beiden Befestigungsschichten (S1, S2) verbleibt.

11. Verfahren nach Anspruch 10, dadurch gekennzeichnet, daß es zwischen dem zweiten und dem dritten Schritt eine Phase eines solchen Abtragens der Schicht (E3) aus nichtmagnetischem Material enthält, daß von dieser Schicht nur der Teil (E2) erhalten bleibt, der zwischen den beiden Befestigungsschichten (S1, S2) beibehalten werden muß.

12. Magnetischer Aufzeichnungs/Lese-Kopf mit zwei Magnetpolen (P1, P2), die durch einen Spalt (E1) aus nichtmagnetischem Material voneinander getrennt sind, dadurch gekennzeichnet, daß er auch Befestigungsschichten (S1, S2) aus einem magnetischen Material enthält, die einen guten Koeffizienten einer Klebung auf den Magnetpolen besitzen, wobei sie nur die Magnetpole (P1, P2) bedecken, wobei die nichtbedeckten Zonen durch ein nichtmagnetisches Material (V1, V2) belegt sind, und wobei die Einheit von Befestigungsschichten (S1, S2) und des nichtmagnetischen Materials (V1, V2) von einer abriebfesten Schicht (C1) bedeckt sind, die einen guten Koeffizienten einer Klebung auf dem Material der Befestigungsschichten besitzt.

13. Magnetischer Aufzeichnungs/Lese-Kopf nach Anspruch 12, dadurch gekennzeichnet, daß die obere Fläche des nichtmagnetischen Materials (V1, V2) mit der oberen Fläche der Befestigungsschichten (S1, S2) fluchtet, um eine ebene Oberfläche zu bilden.
